# EUROPÄISCHE PATENTSCHRIFT

(11) **EP 1 142 467 B1**
(45) Veröffentlichungstag und Bekanntmachung des Hinweises auf die Patenterteilung: **02.06.2004**
(21) Anmeldenummer: 01107119.8
(22) Anmeldetag: 22.03.2001
(51) Int. Cl.: A01D 45/02

(54) **Vorrichtung zum Pflücken der Fruchtstände stängeliger Erntegüter**
Device for picking stem crops
Dispositif de cueillette de céréales

(30) Priorität: 06.04.2000 DE 10016824
(43) Veröffentlichungstag der Anmeldung: 10.10.2001
(73) Patentinhaber: CLAAS Saulgau GmbH, 88348 Bad Saulgau (DE)
(72) Erfinder: Albinger, Bernd, 88454 Hochdorf (DE)

(56) Entgegenhaltungen:
- EP-A- 0 131 853
- EP-A- 0 491 405
- EP-A- 0 534 199
- EP-A- 0 750 833
- DE-U- 8 535 733
- US-A- 4 446 682
- US-A- 4 538 404

## Beschreibung

Die Erfindung betrifft ein Vorsatzgerät zum Ernten stängeliger Erntegüter gemäß dem Oberbegriff des Anspruchs 1.

Bei derartigen, mehrteilig ausgeführten Vorsatzgeräten besteht das Problem, dass beim Verschwenken der an einem Mittelteil angeordneten Seitenteile von der Arbeits- in die Transportstellung die den jeweils im Schwenkbereich zwischen dem Mittelteil und dem jeweiligen Seitenteil liegenden Arbeitsorganen obenseitig zugeordneten Abdeckungen den Verschwenkvorgang dadurch behindern, dass diese Abdeckhauben im Moment ihres Verschwenkens mit den nicht verschwenkbaren Abdeckhauben des Mittelteils kollidieren können.

Diese Kollision vermeidend, ist in der europäischen Patentschrift EP-A-0 534 199 eine Ausführung offenbart, deren um in Fahrtrichtung weisende Achsen verschwenkbaren Seitenteile über Schlittenführungen mit dem nicht verschwenkbaren Mittelteil in der Weise verbunden sind, dass die Seitenteile vor dem Verschwenken mittels der Schlittenführungen quer zur Fahrtrichtung verschoben werden. Auf diese Weise wird sichergestellt, dass sich der quer zur Fahrtrichtung erstreckende Abstand der Arbeitsorgane mit den ihnen zugeordneten Abdeckungen im Schwenkbereich zwischen dem Mittelteil und dem jeweiligen Seienteil vergrößert, bevor die Seitenteile in die Transportstellung verschwenkt werden. Diese Abstandsvergrößerung schafft so die Voraussetzungen für ein kollisionsfreies Verschwenken der Seitenteile.

In der europäischen Patentschrift EP-A-0 131 853 ist ferner eine Ausführung beschrieben, deren im Schwenkbereich zwischen dem Mittelteil und den verschwenkbaren Seitenteilen angeordneten Abdeckhauben untenseitig jeweils ein Hubzylinder zugeordnet ist, der ein Verschwenken dieser Abdeckhauben unabhängig vom Verschwenkvorgang der Seitenteile ermöglicht. Der wesentliche Nachteil einer derartigen Ausführung ist darin zu sehen, dass die mittels der Hubzylinder verschwenkbaren Abdeckhauben über Scharniere am Hauptrahmen des Mittelteils angelenkt sind, sodass sie nur um in Fahrtrichtung weisende Achsen verschwenkt werden können. Trifft eine derart ausgeführte Abdeckhaube auf ein Hindernis, wie beispielsweise einen auf dem Feld liegenden Stein oder dergleichen, ist die Abdeckhaube nicht in der Lage diesem Hindernis Beschädigungen vermeidend in vertikaler Richtung auszuweichen.

Der Erfindung liegt deshalb die Aufgabe zugrunde ein Vorsatzgerät zum Ernten von stängeligen Erntegütern so zu gestalten, dass die im Schwenkbereich zwischen dem Mittelteil und dem oder den verschwenkbaren Seitenteilen angeordneten Abdeckungen auf konstruktiv einfache Weise in eine während des Verschwenkvorganges der Seitenteile kollisionsfreie Position verbracht werden können und in der Arbeitsstellung dennoch in der Lage sind, Hindernissen beschädigungsvermeidend auszuweichen.

Erfindungsgemäß wird die Aufgabe durch ein Vorsatzgerät zum Ernten stängeliger Erntegüter mit den kennzeichnenden Merkmalen des Anspruchs 1 gelöst.

Indem das wenigstens eine im Schwenkbereich angeordnete Abdeckelement um eine quer zur Fahrtrichtung verlaufende Achse an einem Zwischenrahmen angelenkt ist, der wiederum um eine in Fahrtrichtung weisende Achse mit dem Hauptrahmen des Vorsatzgerätes in Wirkverbindung steht, wird sichergestellt, dass die Abdeckhaube einerseits beim Verschwenken der Seitenteile von der Arbeits- in die Transportstellung und umgekehrt in eine Kollisionen vermeidende Position verbracht werden kann. Zum Anderen ist das um eine quer zur Fahrtrichtung verlaufende Achse schwenkbare Abdeckelement in der Arbeitsstellung beim Auftreffen auf ein Hinderniss in vertikaler Richtung in eine Beschädigungen vermeidende Position verschwenkbar.

Damit die Arbeitsorgane verstopfungsminimierend großflächig abgeschirmt sind und die in das Vorsatzgerät einlaufenden Erntegutstängel sicher geführt werden, sind die Abdeckelemente in einer vorteilhaften Ausgestaltung der Erfindung zweiteilig in Form einer vorderen und einer hinteren Abdeckhaube ausgeführt.

Um einen konstruktiv einfachen Aufbau der zweiteilig ausgeführten Abdeckelemente zu erhalten, können in einer ersten vorteilhaften Ausführungsform die vordere und die jeweils hintere Abdeckhaube miteinander gelenkig verbunden sein, wobei nur die hintere Abdeckhaube über die sich quer zur Fahrtrichtung erstreckende Achse schwenkbar mit dem Zwischenrahmen verbunden ist. Auf diese Weise wird sichergestell, dass die das Abdeckelement bildenden Abdeckhauben beim Auftreffen auf ein Hindernis in raumsparender Weise zusammenklappen und die dabei zu bewegenden Massen gering bleiben.

Um andererseits den zweiteiligen Abdeckelementen eine hohe Stabilität zu verleihen, können die vordere und die hintere Abdeckhaube auch über einen gemeinsamen Stützrahmen gelenkig miteinander verbunden sein, wobei bei einer derartigen Ausführung der Stützrahmen über die quer zur Fahrtrichtung verlaufende Achse am Zwischenrahmen angelenkt ist.

Zur Vermeidung verschleißfördernder ruckartiger Ausweichbewegungen der Abdeckhauben beim Auftreffen auf ein Hindernis, kann den Abdeckhauben in vorteilhafter Weiterbildung der Erfindung jeweils wenigstens ein Dämpfungselement zugeordnet sein. In an sich bekannter Weise kann dieses Dämpfungselement konstruktionsvereinfachend als hydraulischer und/oder pneumatischer und/oder mechanischer Stoßdämpfer ausgebildet sein.

Die Schwenkbewegung der Seitenrahmenteile des Vorsatzgerätes und des den jeweiligen Abdeckelementen zugeordneten Zwischenrahmens wird in einer weiteren vorteilhaften Ausgestaltung der Erfindung durch Hubzylinder realisiert. Zur Gewährleistung eines selbsttätigen Verschwenkens der im Schwenkbereich angeordneten Abdeckhauben in eine Kollisionen vermeidende Position und des Verschwenkens der Seitenrahmenteile von der Arbeits- in die Transportstellung und umgekehrt sind die jeweiligen Hubzylinder der Seitenrahmenteile mit dem Hubzylinder des mit dem jeweiligen Seitenrahmenteil in Wirkverbindung stehenden Zwischenrahmens durch Parallelschaltung miteinander gekoppelt.

In vorteilhafter Weiterbildung der Erfindung sind die durch Parallelschaltung miteinander gekoppelten Hubzylinder so dimensioniert, dass beim Verschwenken von der Arbeits- in die Transportstellung stets zuerst das mit dem Zwischenrahmen verbundene Abdeckelement in eine kollisionsvermeidende Position verschwenkt wird, bevor sich das jeweilige Seitenrahmenteil in die Transportstellung bewegt.

Indem dem Hubzylinder des Zwischenrahmens ein entsperrbares Rückschlagventil zugeordnet wird, welches erst durch die Abwärtsbewegung des jeweiligen Seitenrahmenteils von der Transport- in die Arbeitstellung entsperrt wird, ist sichergestellt, dass die in Kollisionen vermeidender Position befindliche Abdeckhaube erst in ihre Arbeitsposition verschwenkt, wenn keine Kollisionsgefahr mehr mit anderen Baugruppen des Vorsatzgerätes besteht. Eine konstruktiv einfach gestaltbare Auslösung der Entriegelung des Rückschlagventils sowie die vollständige Vermeidung von Kollisionen der um in Fahrtrichtung weisende Achsen verschwenkbaren Abdeckelemente mit anderen Baugruppen des Vorsatzgerätes wird dann erreicht, wenn die Entriegelung der jeweiligen Rückschlagventile erst nachdem die Seitenteile ihre Arbeitsposition erreicht haben vollzogen wird.

Um ein Pendeln der Abdeckelemente beim Verschwenken der Seitenrahmenteile in die Transportstellung zu vermeiden, kann in einer weiteren vorteilhaften Ausgestaltung der Erfindung jede Abdeckhaube in der Arbeitsstellung verriegelbar ausgeführt sein, sodass deren Verschwenken um die quer zur Fahrtrichtung liegende Achse blockiert ist. Die Verriegelungsfunktion kann zudem in ebenem und keine Hindernisse aufweisendem Gelände genutzt werden, um eine vibrationsarme Anordnung der Abdeckhauben zu erreichen.

Weitere vorteilhafte Ausgestaltungen sind Gegenstand weiterer Unteransprüche und werden nachfolgend anhand von Zeichnungen näher erläutert.

Es zeigen
- Figur 1: eine schematische Frontansicht des erfindungsgemäßen Vorsatzgerätes
- Figur 2: eine Detailansicht eines Abdeckelementes in Draufsicht und Seitenansicht
- Figur 3: eine Detailansicht eines Abdeckelementes in zwei erfindungsgemäßen Schwenkpositionen in Ansicht von vom
- Figur 4: einen erfindungsgemäßen Hydraulikschaltplan
- Figur 5: eine Detailansicht einer Schwenkposition des Abdeckelementes nach dem Auffahren auf ein Hindernis.

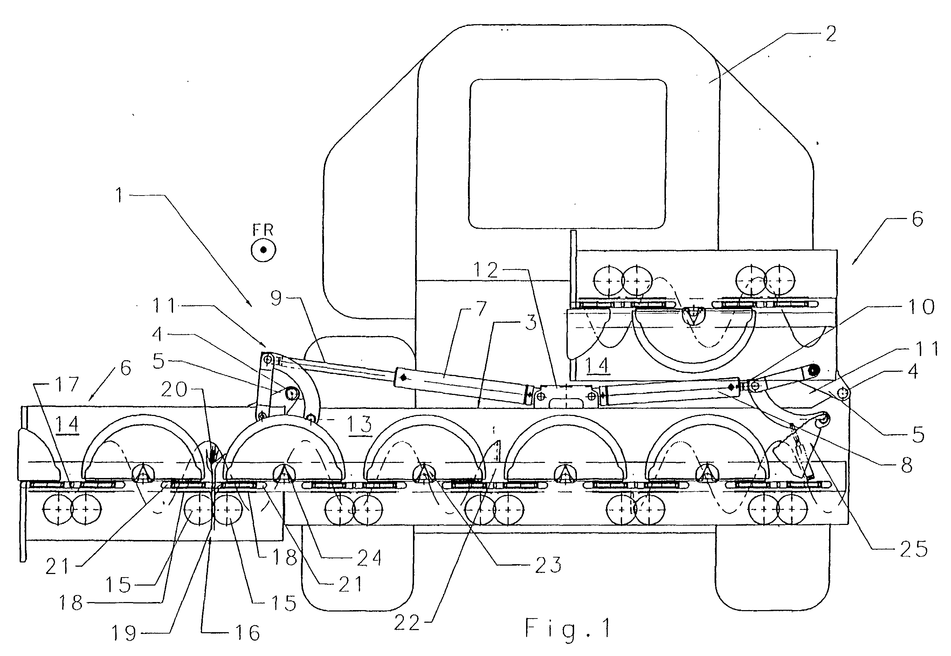

Figur 1 zeigt ein erfindungsgemäßes Vorsatzgerät 1 welches in seinem rückwärtigen Bereich in nicht näher dargestellter Weise an ein Trägerfahrzeug 2 adaptiert ist, wobei das Trägerfahrzeug 2 beispielsweise als Mähdrescher oder Häcksler ausgebildet sein kann. Das Vorsatzgerät 1 unterteilt sich in einen direkt mit dem Trägerfahrzeug 2 verbundenen Mittelteil 3, der in seinen Randbereichen in Fahrtrichtung FR weisende Schwenkachsen 4 aufnimmt. Die Schwenkachsen 4 werden von Halteflanschen 5 umgriffen, die anderenends drehfest mit verschwenkbaren Seitenteilen 6 verbunden sind, wobei in Figur 1 das linke Seitenteil 6 in der bodennahen Arbeitsstellung und das rechte Seitenteil 6 in einer über dem Mittelteil 3 liegenden Transportstellung dargestellt ist. Zum Verschwenken der Seitenteile 6 von der Arbeits- in die Transportstellung und umgekehrt sind dem nicht verschwenkbaren Mittelteil 3 Hubzylinder 7, 8 gelenkig zugeordnet, deren Kolbenstangen 9, 10 über je einen Koppelmechanismus 11 das Mittelteil 3 mit den jeweiligen Seitenteilen 6 drehbeweglich verbinden, wobei abweichend von der dargestellten Ausführung die Kolbenstange 9, 10 auch direkt an dem jeweiligen Seitenteil 6 angeordnet sein kann. Eine Druckbeaufschlagung der Hubzylinder 7, 8 durch die nicht dargestellte Druckquelle des Trägerfahrzeugs 2 führt je nach Bewegungsrichtung der jeweiligen Kolbenstange 9, 10 zum Anheben oder Absenken der Seitenteile 6.

Aufgrund der Mehrteiligkeit des Vorsatzgerätes 1 unterglieder sich dessen Hauptrahmen 12 in einen Mittelrahmenteil 13 und diesem schwenkbeweglich zugeordnete Seitenrahmenteile 14.

Die verschiedenen Rahmenteile 13, 14 des als Pflückvorsatz ausgebildeten Vorsatzgerätes 1 nehmen untenseitig als paarweise zusammenarbeitende Pflückwalzen 15 ausgeführte Arbeitsorgane 16 auf. In an sich bekannter Weise sind jedem Pflückwalzenpaar 15, 16 obenseitig zwischen sich einen Pflückspalt 17 ausbildende Pflückplatten 18 zugeordnet, durch deren Pflückspalt 17 ein von den Pflückwalzen 15 erfasster Stängel 19 hindurchgezogen wird, wobei die Fruchtstände 20 an den Pflückplatten 18 abgestriffen und mittels Förderketten 21 in den rückwärtigen Bereich der Pflückwalzen 15 gefördert werden. Im dargestellten Ausführungsbeispiel ist dem Vorsatzgerät 1 im rückwärtigen Bereich der Pflückwalzen 15 eine Querförderschnecke 22 zugeordnet, die die von den Förderketten 21 in diesen Bereich transportierten Fruchtstände 20 mittig zusammenführt und in an sich bekannter Weise an das Trägerfahrzeug 2 übergibt.

Zur Verbesserung der Stengelführung im Bereich der Arbeitsorgane 16 und zur Vermeidung übermäßiger Verschmutzungen sind die Abstände zwischen benachbarten Arbeitsorganen 16 durch noch näher zu beschreibende Abdeckelemente 23 abgeschirmt, wobei der durch die Lage der Arbeitsorgane 16 bestimmte Abstand zwischen benachbarten Abdeckelementen 23 im Bereich des Aufeinandertreffens zwischen Mittelteil 3 und den verschwenkbaren Seitenteilen 6 dazu führt, dass genau dieser Bereich von ebenfalls noch näher zu beschreibenden erfindungsgemäßen Abdeckelementen 24, 25 überbrückt wird.

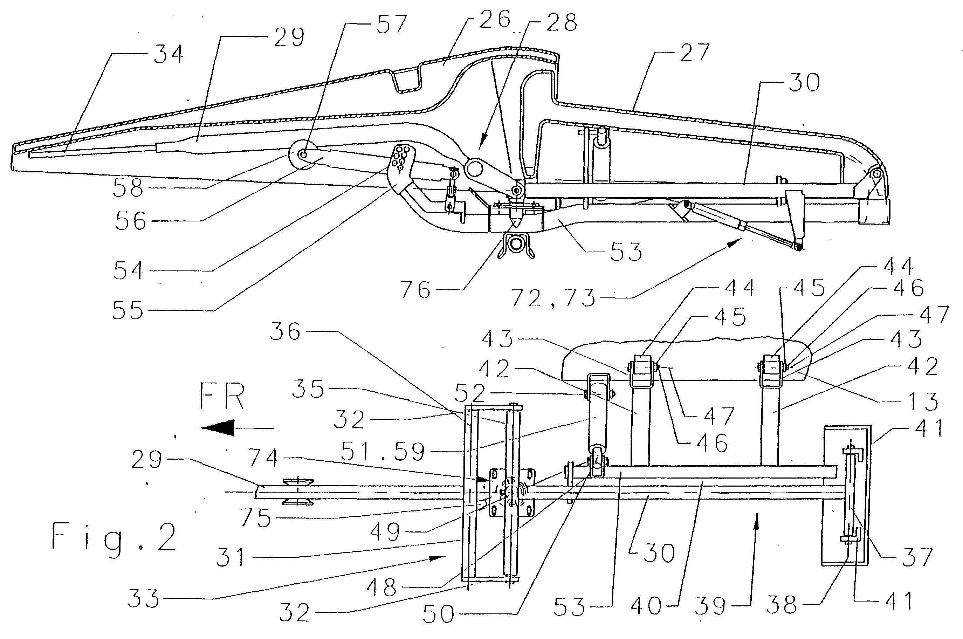

Die Abdeckelemente 23-25 setzen sich gemäß Figur 2 aus einer vorderen Abdeckhaube 26 und einer wenigstens teilweise in diese vordere Abdeckhaube 26 hineinragenden hinteren Abdeckhaube 27 zusammen. Beide Abdeckhauben 26, 27 sind über einen Stützrahmen 28 schwenkbeweglich miteinander verbunden, wobei die vordere Abdeckhaube 26 auf der Verlängerung 34 des in ihrem Inneren verlaufenden vorderen Tragrohrs 29 aufliegt und die hintere Abdeckhaube 27 mit dem in deren Inneren angeordneten hinteren Tragrohr 30 des Stützrahmens 28 verbunden ist. Das vordere Tragrohr 29 verfügt an seinem rückwärtigen Ende über eine einen Quersteg 31 und Begrenzungsflansche 32 aufweisende Haltegabel 33. Im Frontbereich ist dem vorderen Tragrohr 29 eine stegförmige Verlängerung 34 angeformt. Das hintere Tragrohr 30 nimmt in seinem Frontbereich einen Quersteg 35 auf, der innerhalb der Begrenzungsflansche 32 in die Haltegabel 33 des vorderen Tragrohrs 29 eingreift und mit dieser um eine quer zur Fahrtrichtung FR weisende Achse 36 schwenkbeweglich verbunden ist, sodass die vordere Abdeckhaube 26 und die hintere Abdeckhaube 27 in vertikaler Richtung in ihrer Lage zueinander um Achse 36 verschwenkbar sind. Am rückwärtigen Ende des hinteren Tragrohrs 30 ist ein Quersteg 37 drehfest angeordnet, der von einer quer zur Fahrtrichtung FR verlaufenden Schwenkachse 38 durchsetzt wird. Für die nicht im Schwenkbereich zwischen dem Mittelteil 3 und dem jeweiligen Seitenteil 6 liegenden Abdeckelemente 23 sind die Schwenkachsen 38 in nicht näher dargestellter Weise an den entsprechenden Rahmenteilen 13,14 des Vorsatzgerätes 1 angeordnet. Für die im Schwenkbereich zwischen dem Mittelteil 3 und dem jeweiligen Seitenteil 6 liegenden Abdeckelemente 24, 25 sind die Schwenkachsen 38 in dem erfindungsgemäßen Zwischenrahmen 39 gelagert.

Der Zwischenrahmen 39 wird von einer Rahmenkonstruktion 40 gebildet, die in ihrem rückwärtigen Bereich über eine gabelförmige Abstützung 41 zur Aufnahme der Schwenkachse 38 verfügt. Im beschriebenen Ausführungsbeispiel verfügt die Rahmenkonstruktion 40 über zwei in den Bereich des Mittelteils 3 des Vorsatzgerätes 1 hineinragende Querstege 42 denen einenends gabelförmige Halterungen 43 angeformt sind. Dem Mittelrahmenteil 13 sind im Bereich der gabelförmigen Halterungen 43 der Querstege 42 Stützstellen 44 zugeordnet, die mittels Verschraubungen 45, 46 den Zwischenrahmen 39 um in Fahrtrichtung FR weisende Achsen 47 schwenkbar aufnehmen. Etwa mittig nimmt der Zwischenrahmen 39 eine weitere Abstützung 48 auf, die von einem die Kolbenstange 50 eines Hubzylinders 51 aufnehmenden Bolzen 49 drehbeweglich durchsetzt wird. Anderenends ist der Hubzylinder um eine in Fahrtrichtung FR weisende Achse 52 schwenkbar am Mittelrahmenteil 13 befestigt. In seinem in Fahrtrichtung FR vom liegenden Bereich ist dem Hauptragprofil 53 des Zwischenrahmen 39 ein von Bohrungen 54 durchsetzter Doppelflansch 55 angeformt, der von einem Stegprofil 56 schwenkbeweglich durchsetzt wird, wobei die Neigung des Stegprofils 56 mittels der Bohrungen 54 einstellbar ist, sodass die Neigung des vorderen Tragrohrs 29 und damit die Neigung der vorderen Abdeckhaube 26 an unterschiedliche Erntebedingungen angepasst werden kann. Aufgrund dessen, dass das vordere Tragrohr 29 nur auf dem Stegprofil 56 des Zwischenrahmens 39 aufliegt, ist das Stegprofil 56 frontseitig mit einer um eine quer zur Fahrtrichtung FR orientierte Achse 57 umlaufenden Rolle 58 versehen, die den durch die Reibung zwischen Stegprofil 56 und vorderem Tragrohr 29 auftretenden Verschleiß reduzieren soll. Für die nicht im Schwenkbereich zwischen Mittelteil 3 und den Seitenteilen 6 des Vorsatzgerätes angeordneten Abdeckelemente 23 ist das die Rolle 58 aufnehmende und über den Doppelflansch 55 in der Neigung einstellbare Stegprofil 56 in nicht dargestellter Weise direkt an dem jeweiligen Rahmenteil 13, 14 schwenkbar befestigt, da hier der erfindungsgemäße Zwischenrahmen 39 nicht erforderlich ist.

Aufgrund dessen, dass der rückwärtige Quersteg 37 des hinteren Tragrohrs 30 der Abdeckelemente 23-25 um eine quer zur Fahrtrichtung FR weisende Achse 38 schwenkbar am jeweiligen Zwischenrahmen 39 oder an den jeweiligen Hauptrahmenteilen 13, 14 angelenkt ist, wobei der Zwischenrahmen 39 mittels Hubzylinder 51 zusätzlich um eine in Fahrtrichtung FR verlaufende Achse 47 schwenkbar ist, wird die Möglichkeit geschaffen, dass die im Schwenkbereich zwischen dem Mittelteil 3 und den Seitenteilen 6 angeordneten Abdeckelemente 24, 25 fremdbetätigt aus diesem Bereich verschwenkt werden können und jedes aus einer vorderen und einer hinteren Abdeckhaube 26, 27 bestehende Abdeckelement 23-25 unabhängig von seiner Anordnung am Vorsatzgerät 1 beim Auftreffen auf Hindernisse in eine Beschädigungen minimierende Position in vertikaler Richtung ausweichen kann.

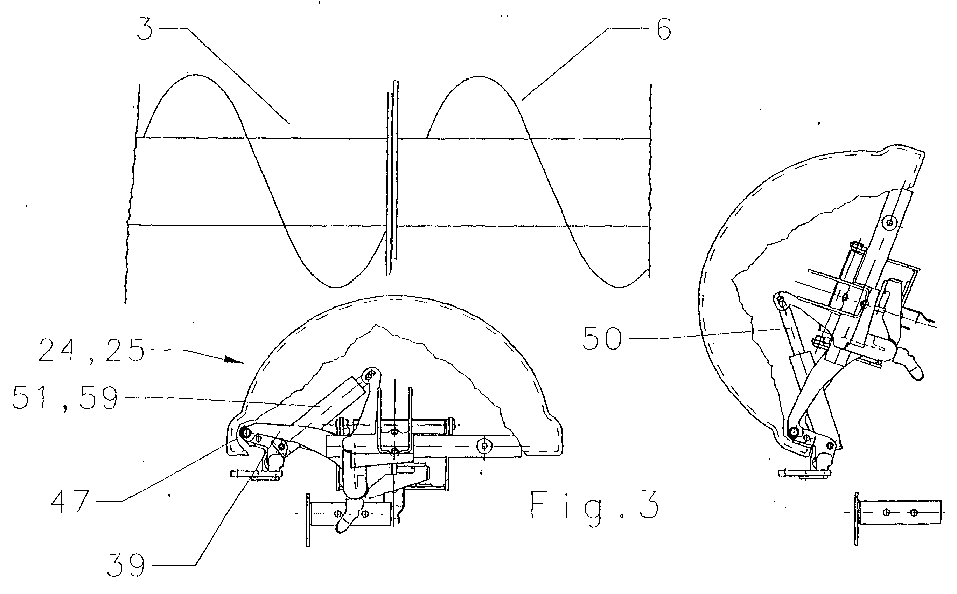

In Figur 3 ist das Verschwenken der im Schwenkbereich zwischen dem Mittelteil 3 und den Seitenteilen 6 positionierten Abdeckelemente 24, 25 am Beispiel des Abdeckelementes 25 erklärt, wobei für das Abdeckelement 24 der Zwischenrahmen 39 und der Hubzylinder 51 spiegelbildlich anzuordnen sind. Gemäß der linken Darstellung in Figur 3 befindet sich das Abdeckelement 25 in der Arbeitsstellung in einer horizontalen, im Schwenkbereich zwischen dem Mittelteil 3 und dem jeweiligen Seitenteil 6 angeordneten Position, die ein Verschwenken der jeweiligen Seitenteile 6 stark beeinträchtigen oder unmöglich machen würde. Wird nun der in Arbeitsstellung "eingefahrene" Hubzylinder 51 druckbeaufschlagt, tritt die Kolbenstange 50 aus dem Hubzylinder 51 heraus und verschwenkt den Zwischenrahmen 39 um Achse 47 in die in Figur 3, rechte Darstellung, gezeigte Position. Auf diese Weise wird das jeweilige Abdeckelement 24, 25 aus dem Schwenkbereich zwischen dem Mittelteil 3 und dem jeweiligen Seitenteil 6 des Vorsatzgerätes 1 herausgeschwenkt, sodass die Seitenteile 6 problemlos von der Arbeits- in die Transportstellung bewegt werden können. Es liegt im Rahmen der Erfindung, dass der Hubzylinder 51 durch ein beliebig ausgeführtes Stellorgan 59 ersetzt sein kann, welches in der Lage ist, den Zwischenrahmen 39 um Achse 47 zu verschwenken.

Es liegt im Rahmen der Erfindung, dass die in Fahrtrichtung FR weisende Schwenkachse 47 Fig. 2) der Zwischenrahmen 39 auch an dem jeweiligen Seitenrahmenteil 14 der Seitenteile 6 angeordnet sein kann, sodass die Abdeckelemente 24, 25 nicht wie dargestellt in Richtung Mittelteil 3 sondern in Richtung der Seitenteile 6 in eine Kollisionen vermeidende Position verschwenken. Im einfachsten Fall wird dies dadurch erreicht, dass die Querstege 42 in Richtung Seitenteile 6 weisend am Zwischenrahmen 39 angeordnet sind.
Ferner können die vordere und die hintere Abdeckhaube 26, 27 jedes Abdeckelementes 23-25 auch eine solche Stabilität aufweisen, dass auf den Stützrahmen 28 verzichtet werden kann. Bei einer derartigen Ausführung wären dann die vordere und die hintere Abdeckhaube 26, 27 direkt miteinander gelenkig zu verbinden, wobei die hintere Abdeckhaube 27 dann in ihrem rückwärtigen Bereich direkt die quer zur Fahrtrichtung verlaufende Schwenkachse 38 aufnimmt.

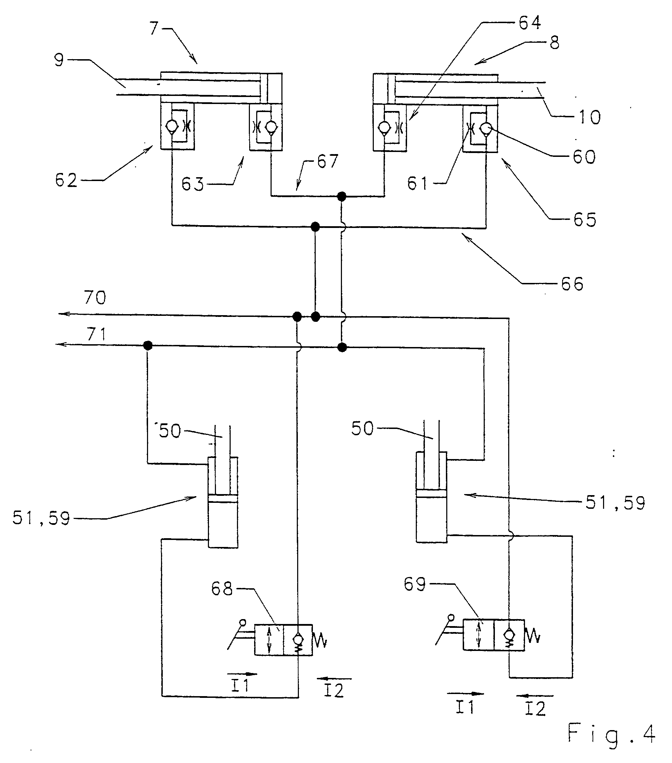

Damit stets sichergestellt ist, dass beim Verschwenken der Seitenteile 6 von der Arbeits- in die Transportstellung stets zuerst die Abdeckelemente 24, 25 aus dem Bereich zwischen dem Mittelteil 3 und dem jeweiligen Seitenteil 6 in eine Kollisionen vermeidende Position verbracht werden und beim Verschwenken der Seitenteile 6 von der Transport- in die Arbeitstellung die Abdeckelement zuletzt in ihre Arbeitsposition zurückschwenken, ist eine in Figur 4 schematisch dargestellte und im Folgenden näher beschriebene Ansteuerung und Dimensionierung der Hubzylinder 51 erforderlich. Gemäß Figur 1 ist jedem Seitenteil 6 ein doppeltwirkender Hubzylinder 7, 8 zugeordnet. Kolbenflächen- und kolbenstangenseitig sind den Hubzylindern 7; 8 (Figur 4) aus Rückschlagventil 60 und Drosselventil 61 bestehende Sperrblöcke 62-65 zugeordnet, wobei jeweils die kolbenflächenseitigen Sperrblöcke 63, 64 und die kolbenstangenseitigen Sperrblöcke 62, 65 über das Leitungssystem 66, 67 miteinander verbunden sind. Jeder Zwischenrahmen 39 nimmt gemäß Figur 2 als doppeltwirkende Hubzylinder 51 ausgeführte Stellorgane 59 auf. Jedem dieser Hubzylinder 51 ist erfindungsgemäß kolbenflächenseitig ein entsperrbares Rückschlagventil 68, 69 zugeordnet, wobei jedes der entsperrbaren Rückschlagventile 68, 69 zudem in das Leitungssystem 66 integriert ist (Fig. 4). Kolbenstangenseitig sind die Hubzylinder 51 mit dem Leitungssystem 67 verbunden. Auf diese Weise sind die Hubzylinder 7, 8, 51 über die Leitungssysteme 66, 67 parallel geschaltet. Jedes der Leitungssysteme 66, 67 verfügt zudem über Anschlussleitungen 70, 71, die mit der nicht dargestellten Druckquelle des Trägerfahrzeugs 2 verbunden sind. Ferner sind die Hubzylinder 7, 8, 51 so dimensioniert, dass die zur Bewegung der Kolbenstangen 50 der Hubzylinder 51 erforderlichen Drücke deutlich geringer sind als die zum Ein- oder Ausfahren der Kolbenstangen 9, 10 der Hubzylinder 7, 8 notwendigen Drücke.

Die in Figur 4 dargestellte Schaltanordnung zeigt die Transportstellung, in der sich die Kolbenstangen 9, 10 der Hubzylinder 7, 8 in eingefahrener Position und die Kolbenstangen 50 der Hubzylinder 51 in ausgeschobener Position befinden. In dieser Position sind die Seitenteile 6 über das Mittelteil 3 (Figur 1, rechte Seite) und die Abdeckelemente (24, 25) in eine außerhalb des Schwenkbereiches liegende Position (Figur 2, rechte Darstellung) verschwenkt. Wird nun Leitungssystem 71 druckbeaufschlagt, können nur die Kolbenstangen 9, 10 aus den Hubzylindern 7, 8 herausgeschoben werden, da die Bewegung der Hubzylinder 51 durch die Stellung des entsperrbaren Rückschlagventils 68, 69 blockiert ist. Das Herausbewegen der Kolbenstangen 9, 10 aus den Zylindern 7, 8 führt zum Absenken der Seitenteile 6 von der Transport- in die Arbeitsstellung. In nicht dargestellter und an sich bekannter Weise lösen die sich abwärts bewegenden Seitenteile 6 an beliebiger Stelle einen Schaltimpuls I1 aus, der das entsperrbare Rückschlagventil 68, 69 in Durchlassstellung schaltet, sodass die Kolbenstangen 50 der kolbenstangenseitig druckbeaufschlagten Hubzylinder 51 einfahren, wobei die Abdeckelemente 24, 25 über den jeweiligen Zwischenrahmen 39 ebenfalls in Arbeitsstellung zurückgeschwenkt werden. Um den Rückschwenkvorgang der Seitenteile 6 nicht zu behindern, erfolgt die Auslösung des Schaltimpulses I1 in vorteilhafter Weise erst dann, wenn die Seitenteile 6 ihre Arbeitsposition erreicht haben.

Soll nun ein Verschwenken der Seitenteile 6 von der Arbeits- in die Transportstellung erfolgen, wird über Anschlussleitung 70 das Leitungssystem 66 druckbeaufschlagt. Das nun in Durchlassstellung befindliche entsperrbare Rückschlagventil 68, 69 führt dazu, dass zuerst die Kolbenstange 50 aus dem Hubzylinder 51 herausbewegt wird, wobei die Abdeckelemente 24, 25 erfindungsgemäß in eine Kollisionen vermeidende Position verschwenkt werden. Eine weitere Druckbeaufschlagung von Leitungssystem 70 führt nun über die Drosselventile 61 der Sperrblöcke 62, 65 zum Einfahren der Kolbenstangen 9, 10 in die Hubzylinder 7, 8, wobei die Seitenteile 6 in die Transportstellung verschwenkt werden. In umgekehrter Weise lösen die Seitenteile 6 bei ihrer Aufwärtsbewegung nun einen Schaltimpuls 12 aus, der die entsperrbaren Rückschlagventile 68, 69 wieder in die in Figur 4 gezeigte Lage zurückschaltet. Hiernach kann der Verschwenkvorgang, wie beschrieben, von vorn beginnen. Um den Ölrücklauf zu gewährleisten, ist jeweils eines der Leitungssysteme 66, 67 mit der zugehörigen Anschlussleitung 70, 71 druckentlastet.

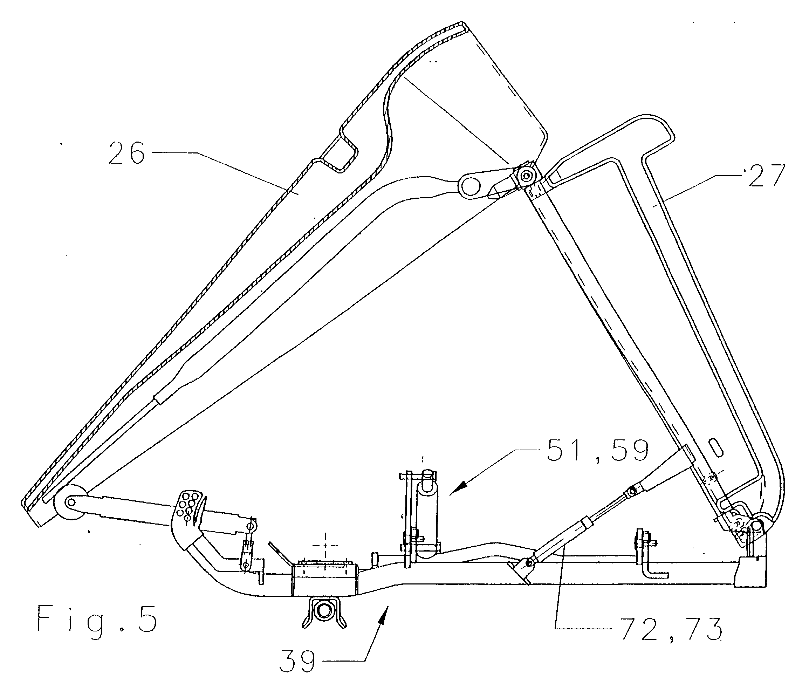

Zur Vermeidung eines ruckartigen Abhebens der Abdeckelemente 23-25 bei deren Kollision mit Hindernissen, kann dem Stützrahmen 28 gemäß Figur 2 ein Dämpfungselement 72 zugeordnet sein, welches die vertikale Schwenkbewegung der Abdeckelemente 23-25 dämpft. Im einfachsten Fall kann das Dämpfungselement 72 als Gasdruckfeder 73 ausgeführt sein, die einenends schwenkbeweglich am Stützrahmen 28 oder direkt an der jeweils hinteren Abdeckhaube 27 angeordnet ist. Anderenends ist die Gasdruckfeder 73 entweder gelenkig mit dem erfindungsgemäßen Zwischenrahmen 39 (Abdeckelemente 24, 25) oder dem jeweiligen Rahmenteil 13, 14 (Abdeckelement 23) verbunden, sodass die Abdeckelemente 23-25 beim Auflaufen auf ein Hindernis eine Position gemäß Figur 5 einnehmen können, wobei nach Überwindung des Hindernisses das Rückschwenken der Abdeckelemente 23-25 durch die Gasdruckfeder 73 unterstützt wird. Zudem kann das Verschwenken gemäß Figur 5 zur Durchführung von Reparaturarbeiten auch von Hand erfolgen.

Damit die aus einer vorderen und einer hinteren Abdeckhaube 26, 27 bestehenden Abdeckelemente 24, 25 in ihre Kollisionen vermeidenden Positionen verschwenkt werden können, ohne dass die Abdeckhauben 26, 27 durch Schwerkraftwirkung um die Schwenkachsen 38 pendeln, sind sie mittels Verriegelungsmechanismus 74 (Fig. 2) an dem jeweiligen Zwischenrahmen 39 arretierbar. Im einfachsten Fall erfolgt die Arretierung über die Betätigung eines Verstellhebels 75, der in einen in vertikaler Richtung am Stützrahmen 28 der Abdeckhauben 26, 27 angeodneten Zapfen 76 eingreift und so dessen vertikale Bewegung und damit auch die vertikale Bewegung der Abdeckhauben 26, 27 blockiert. Für die nicht über den Zwischenrahmen 39 verfügenden Abdeckelemente 23 ist der Verstellmechanismus 74 direkt an dem jeweiligen Rahmenteil 13, 14 angeordnet.

Es liegt im Rahmen der Erfindung, dass der offenbarte Verschwenkmechanismus für Abdeckelemente 23-25 nicht auf das zum Pflücken von Fruchtständen 20 ausgeführte Vorsatzgerät 1 beschränkt ist, sondern an beliebig ausgeführten landwirtschaftlichen Arbeitsgeräten, wie beispielsweise Vorsatzgeräte zur Ganzpflanzenernte, eingesetzt werden kann, um die beschriebenen Effekte zu erzielen.

### Bezugszeichenliste

- 1: Vorsatzgerät
- 2: Trägerfahrzeug
- 3: Mittelteil
- 4: Schwenkachse
- 5: Halteflansch
- 6: Seitenteil
- 7: Hubzylinder
- 8: Hubzylinder
- 9: Kolbenstange
- 10: Kolbenstange
- 11: Koppelmechanismus
- 12: Hauptrahmen
- 13: Mittelrahmenteil
- 14: Seitenrahmenteil
- 15: Pflückwalze
- 16: Arbeitsorgan
- 17: Pflückspalt
- 18: Pflückplatte
- 19: Erntegutstängel
- 20: Fruchtstände
- 21: Förderkette
- 22: Querförderschnecke
- 23: Abdeckelement
- 24: Abdeckelement
- 25: Abdeckelement
- 26: vordere Abdeckhaube
- 27: hintere Abdeckhaube
- 28: Stützrahmen
- 29: vorderes Tragrohr
- 30: hinteres Tragrohr
- 31: Quersteg
- 32: Begrenzungsflansch
- 33: Haltegabel
- 34: Verlängerung
- 35: Quersteg
- 36: Achse
- 37: Quersteg
- 38: Schwenkachse
- 39: Zwischenrahmen
- 40: Rahmenkonstruktion
- 41: Abstützung
- 42: Quersteg
- 43: Halterung
- 44: Stützstelle
- 45: Mutter
- 46: Schraube
- 47: Achse
- 48: Abstützung
- 49: Bolzen
- 50: Kolbenstange
- 51: Hubzylinder
- 52: Achse
- 53: Haupttragprofil
- 54: Bohrung
- 55: Doppelflansch
- 56: Stegprofil
- 57: Achse
- 58: Rolle
- 59: Stellorgan
- 60: Rückschlagventil
- 61: Drosselventil
- 62: Sperrblock
- 63: Sperrblock
- 64: Sperrblock
- 65: Sperrblock
- 66: Leitungssystem
- 67: Leitungssystem
- 68: entsperrbares Rückschlagventil
- 69: entsperrbares Rückschlagventil
- 70: Anschlussleitung
- 71: Anschlussleitung
- 72: Dämpfungselement
- 73: Gasdruckfeder
- 74: Verriegelungsmechanismus
- 75: Verstellhebel
- 76: Zapfen

- FR: Fahrtrichtung
- I1: Stellimpuls
- I2: Stellimpuls

## Patentansprüche

1. Vorsatzgerät (1) zum Ernten stängeliger Erntegüter, dessen Arbeitsorgane an einem mehrteilig ausgeführten, wenigstens ein Mittelteil (3) und ein Seitenteil (6) aufweisenden Hauptrahmen (12, 13, 14) angeordnet sind, wobei sich der Hauptrahmen in wenigstens einen Mittelrahmenteil (13) und einen Seitenrahmenteil (14) unterteilt und der oder die Seitenrahmenteile in ihrer Lage zum Mittelrahmenteil veränderbar sind und den Arbeitsorganen obenseitig Abdeckelemente (24, 24) zugeordnet sind, wobei wenigstens ein Abdeckelement im Schwenkbereich zwischen dem Mittelrahmenteil und dem wenigstens einen Seitenrahmenteil des Hauptrahmens angeordnet ist,
**dadurch gekennzeichnet,**
**dass** das wenigstens eine Abdeckelement (24, 25) um eine quer zur Fahrtrichtung (FR) verlaufende Achse (38) schwenkbar an einem Zwischenrahmen (39) angeordnet ist und eine in Fahrtrichtung (FR) weisende Achse (47) den Zwischenrahmen (39) schwenkbeweglich mit dem Hauptrahmen (12, 13, 14) verbindet.

2. Vorsatzgerät zum Ernten stängeliger Erntegüter nach Anspruch 1,
**dadurch gekennzeichnet,**
**dass** wenigstens ein Abdeckelement (23, 24, 25) von einer vorderen und einer hinteren Abdeckhaube (26, 27) gebildet wird.

3. Vorsatzgerät zum Ernten stängeliger Erntegüter nach Anspruch 2,
**dadurch gekennzeichnet,**
**dass** die vordere und die hintere Abdeckhaube (26, 27) gelenkig miteinander verbunden sind und die hintere Abdeckhaube (27) über die quer zur Fahrtrichtung (FR) verlaufende Achse (38) mit dem Zwischenrahmen (39) oder dem Mittelrahmenteil (13) bzw. dem Seitenrahmenteil (14) des Hauptrahmens (12) verbunden ist.

4. Vorsatzgerät zum Ernten stängeliger Erntegüter nach Anspruch 2,
**dadurch gekennzeichnet,**
**dass** die vordere und die hintere Abdeckhaube (26, 27) über einen Stützrahmen (28) gelenkig miteinander verbunden sind und der Stützrahmen (28) über die quer zur Fahrtrichtung (FR) verlaufende Achse (38) mit dem Zwischenrahmen (39) oder dem Mittelrahmenteil (13) bzw. dem Seitenrahmenteil (14) des Hauptrahmens (12) verbunden ist.

5. Vorsatzgerät zum Ernten stängeliger Erntegüter nach Anspruch 4,
**dadurch gekennzeichnet,**
**dass** der Stützrahmen (28) wenigstens einseitig von einer Rollenführung (58) getragen wird.

6. Vorsatzgerät zum Ernten stängeliger Erntegüter nach einem oder mehreren der vorhergehenden Ansprüche,
**dadurch gekennzeichnet,**
**dass** die Schwenkbewegung des wenigstens einen Abdeckelementes (23, 24, 25) um die quer zur Fahrtrichtung liegende Achse (38) durch ein Dämpfungselement (72) gedämpft wird.

7. Vorsatzgerät zum Ernten stängeliger Erntegüter nach Anspruch 6,
**dadurch gekennzeichnet,**
**dass** das Dämpfungselement (72, 73) als an sich bekannter hydraulischer und/oder pneumatischer und/oder mechanischer Stoßdämpfer ausgebildet ist.

8. Vorsatzgerät zum Ernten stängeliger Erntegüter nach einem oder mehreren der vorhergehenden Ansprüche,
**dadurch gekennzeichnet,**
**dass** die Schwenkbewegung des oder der mit dem Mittelrahmenteil (13) verbundenen Seitenrahmenteile (14) des Hauptrahmens (12) in an sich bekannter Weise durch ein als Hubzylinder (7, 8) ausgeführtes Stellorgan erfolgt und das jedem Seitenrahmenteil (13, 14) ein separater Hubzylinder (7, 8) zugeordnet ist.

9. Vorsatzgerät zum Ernten stängeliger Erntegüter nach einem oder mehreren der vorhergehenden Ansprüche,
**dadurch gekennzeichnet,**
**dass** die Schwenkbewegung jedes Zwischenrahmens (39) der Abdeckelemente (24, 25) um die in Fahrtrichtung (FR) weisende Achse (47) durch ein zwischen dem Mittelrahmenteil (13) oder dem Seitenrahmenteil (14) und dem Zwischenrahmen (39) angeordnetes Stellorgan (59) realisiert wird.

10. Vorsatzgerät zum Ernten stängeliger Erntegüter nach Anspruch 9,
**dadurch gekennzeichnet,**
**dass** das Stellorgan (59) als Hubzylinder (51) ausgeführt ist.

11. Vorsatzgerät zum Ernten stängeliger Erntegüter nach einem oder mehreren der vorhergehenden Ansprüche,
**dadurch gekennzeichnet,**
**dass** das als Hubzylinder (7, 8) ausgeführte Stellorgan des jeweiligen Seitenrahmenteils (14) mit dem als Hubzylinder (51) ausgeführten Stellorgan (59) des Zwischenrahmens (39) in Parallelschaltung verbunden ist.

12. Vorsatzgerät zum Ernten stängeliger Erntegüter nach Anspruch 11,
**dadurch gekennzeichnet,**
**dass** die Dimensionierung der parallel geschalteten Hubzylinder (7, 8, 51) so aufeinander abgestimmt ist, dass beim Verschwenken von der Arbeitsstellung in die Transportstellung zuerst der Zwischenrahmen (39) selbsttätig um die in Fahrtrichtung (FR) weisende Achse (47) verschwenkt, bevor das Seitenrahmenteil (14) von der Arbeitsstellung in die Transportstellung bewegt wird.

13. Vorsatzgerät zum Ernten stängeliger Erntegüter nach einem oder mehreren der vorhergehenden Ansprüche,
**dadurch gekennzeichnet,**
**dass** der den Zwischrahmen (39) um die in Fahrtrichtung (FR) weisende Achse (47) verschwenkende Hubzylinder (51) mit einem entsperrbaren Rückschlagventil (68, 69) gekoppelt ist.

14. Vorsatzgerät zum Ernten stängeliger Erntegüter nach einem oder mehreren der vorhergehenden Ansprüche,
**dadurch gekennzeichnet,**
**dass** beim Verschwenken des wenigstens einen Seitenrahmenteils (14) von der Transportstellung in die Arbeitsstellung und umgekehrt von dem sich bewegenden Seitenrahmenteil (14) ein Schaltimpuls (I1, I2) zur selbsttätigen Schaltung des mit dem Hubzylinder (51) des Zwischenrahmens (39) gekoppelten, entsperrbaren Rückschlagventils (68, 69) generiert wird.

15. Vorsatzgerät zum Ernten stängeliger Erntegüter nach Anspruch 14,
**dadurch gekennzeichnet,**
**dass** die Generierung der Schaltimpulse (I1, I2) zur Schaltung des entsperrbaren Rückschlagventils (68, 69) stets beim Erreichen oder Verlassen der Arbeitsstellung des verschwenkbaren Seitenrahmenteils (14) erfolgt.

16. Vorsatzgerät zum Ernten stängeliger Erntegüter nach einem oder mehreren der vorhergehenden Ansprüche,
**dadurch gekennzeichnet,**
**dass** der Stützrahmen (28) der Abdeckelemente (23, 24, 25) in der Arbeitsstellung verriegelbar ist.

17. Vorsatzgerät zum Ernten stängeliger Erntegüter nach einem oder mehreren der vorhergehenden Ansprüche,
**dadurch gekennzeichnet,**
**dass** die Neigung der vorderen Abdeckhauben (26) der Abdeckelemente (23, 24, 25) in vertikaler Richtung einstellbar ist.

## Claims

1. A front-mounted implement (1) for harvesting stalk crops, whose working members are arranged on a main frame (12, 13, 14) which is of a multi-part structure and which has at least a central part (3) and a lateral part (6), wherein the main frame is subdivided into at least a central frame part (13) and a lateral frame part (14) and the lateral frame part or parts are variable in position relative to the central frame part, and associated with the working members at the top side are cover elements (24, 24), wherein at least one cover element is arranged in the pivotal region between the central frame part and the at least one lateral frame part of the main frame, **characterised in that** the at least one cover element (24, 25) is arranged on an intermediate frame (39) pivotably about an axis (38) extending transversely with respect to the direction of travel (FR) and an axis (47) facing in the direction of travel (FR) pivotably movably connects the intermediate frame (39) to the main frame (12, 13, 14).

2. A front-mounted implement (1) for harvesting stalk crops according to claim 1 **characterised in that** at least one cover element (23, 24, 25) is formed by a front and a rear cover hood (26, 27).

3. A front-mounted implement (1) for harvesting stalk crops according to claim 2 **characterised in that** the front and rear cover hood (26, 27) are hingedly connected together and the rear cover hood (27) is connected by way of the axis (38) extending transversely with respect to the direction of travel (FR) to the intermediate frame (39) or the central frame part (13) or the lateral frame part (14) of the main frame (12).

4. A front-mounted implement (1) for harvesting stalk crops according to claim 2 **characterised in that** the front and the rear cover hood (26, 27) are hingedly connected together by way of a support frame (28) and the support frame (28) is connected by way of the axis (38) extending transversely with respect to the direction of travel (FR) to the intermediate frame (39) or the central frame part (13) or the lateral frame part (14) of the main frame (12).

5. A front-mounted implement (1) for harvesting stalk crops according to claim 4 **characterised in that** the support frame (28) is carried at least at one side by a roller guide (58).

6. A front-mounted implement (1) for harvesting stalk crops according to one or more of the preceding claims **characterised in that** the pivotal movement of the at least one cover element (23, 24, 25) about the axis (38) which is transverse with respect to the direction of travel is damped by a damping element (72).

7. A front-mounted implement (1) for harvesting stalk crops according to claim 6 **characterised in that** the damping element (72, 73) is in the form of a per se known hydraulic and/or pneumatic and/or mechanical shock absorber.

8. A front-mounted implement (1) for harvesting stalk crops according to one or more of the preceding claims **characterised in that** the pivotal movement of the lateral frame part or parts (14) of the main frame (12), connected to the central frame part (13), is effected in per se known manner by a control member in the form of a stroke cylinder (7, 8) and a separate stroke cylinder (7, 8) is associated with each lateral frame part (13, 14).

9. A front-mounted implement (1) for harvesting stalk crops according to one or more of the preceding claims **characterised in that** the pivotal movement of each intermediate frame (39) of the cover elements (24, 25) about the axis (47) facing in the direction of travel (FR) is effected by a control member (59) arranged between the central frame part (13) or the lateral frame part (14) and the intermediate frame (39).

10. A front-mounted implement (1) for harvesting stalk crops according to claim 9 **characterised in that** the control member (59) is in the form of a stroke cylinder (51).

11. A front-mounted implement (1) for harvesting stalk crops according to one or more of the preceding claims **characterised in that** the control member in the form of the stroke cylinder (7, 8) of the respective lateral frame part (14) is connected in parallel with the control member (59) in the form of the stroke cylinder (51) of the intermediate frame (39).

12. A front-mounted implement (1) for harvesting stalk crops according to claim 11 **characterised in that** the dimensioning of the parallel-connected stroke cylinders (7, 8, 51) is so matched to each other that in the pivotal movement from the working position into the transport position firstly the intermediate frame (39) is automatically pivoted about the axis (47) facing in the direction of travel (FR) before the lateral frame part (14) is moved from the working position into the transport position.

13. A front-mounted implement (1) for harvesting stalk crops according to one or more of the preceding claims **characterised in that** the stroke cylinder (51) pivoting the intermediate frame (39) about the axis (47) facing in the direction of travel (FR) is coupled to an openable check valve (68, 69).

14. A front-mounted implement (1) for harvesting stalk crops according to one or more of the preceding claims **characterised in that** in the pivotal movement of the at least one lateral frame part (14) from the transport position into the working position and vice-versa a switching pulse (I1, I2) is generated by the moving lateral frame part (14) for automatically switching the openable check valve (68, 69) which is coupled to the stroke cylinder (51) of the intermediate frame (39).

15. A front-mounted implement (1) for harvesting stalk crops according to claim 14 **characterised in that** generation of the switching pulses (I1, I2) for switching the openable check valve (68, 69) is always effected upon reaching or leaving the working position of the pivotable lateral frame part (14).

16. A front-mounted implement (1) for harvesting stalk crops according to one or more of the preceding claims **characterised in that** the support frame (28) of the cover elements (23, 24, 25) is lockable in the working position.

17. A front-mounted implement (1) for harvesting stalk crops according to one or more of the preceding claims **characterised in that** the inclination of the front cover hoods (26) of the cover elements (23, 24, 25) is adjustable in a vertical direction.

## Revendications

1. Outil frontal (1) pour la cueillette de produits de récolte à tige, dans lequel les organes de travail sont disposés sur un châssis principal (12, 13, 14) en plusieurs parties, comportant au moins un élément central (3) et un élément latéral (6), le châssis principal étant divisé en au moins un élément de châssis central (13) et un élément de châssis latéral (14), la position du ou des élément(s) de châssis latéral par rapport à l'élément de châssis central pouvant être modifiée, des éléments de capotage (24, 24) étant associés aux organes de travail côté supérieur, au moins un élément de capotage étant disposé dans la zone de pivotement entre l'élément de châssis central et l'élément de châssis latéral au nombre d'au moins un du châssis principal, **caractérisé par le fait que** l'élément de capotage (24, 25) au nombre d'au moins un est disposé sur un châssis intermédiaire (39) avec possibilité de pivotement autour d'un axe (38) qui s'étend transversalement à la direction de déplacement (FR), et **par le fait qu'**un axe (47) orienté dans la direction de déplacement (FR) relie avec possibilité de pivotement le châssis intermédiaire (39) au châssis principal (12, 13, 14).

2. Outil frontal pour la cueillette de produits de récolte à tige selon la revendication 1, **caractérisé par le fait que** l'élément de capotage (23, 24, 25) au nombre d'au moins un est formé d'un capot avant et d'un capot arrière (26, 27).

3. Outil frontal pour la cueillette de produits de récolte à tige selon la revendication 2, **caractérisé par le fait que** le capot avant et le capot arrière (26, 27) sont liés l'un à l'autre de manière articulée et le capot arrière (27) est lié par l'intermédiaire de l'axe (38) orienté transversalement à la direction de déplacement au châssis intermédiaire (39) ou à l'élément de châssis central (13) ou à l'élément de châssis latéral (14) du châssis principal (12).

4. Outil frontal pour la cueillette de produits de récolte à tige selon la revendication 2, **caractérisé par le fait que** le capot avant et le capot arrière (26, 27) sont liés l'un à l'autre de manière articulée par l'intermédiaire d'un châssis-support (28) et le châssis-support (28) est lié par l'intermédiaire de l'axe (38) orienté transversalement à la direction de déplacement au châssis intermédiaire (39) ou à l'élément de châssis central (13) ou à l'élément de châssis latéral (14) du châssis principal (12).

5. Outil frontal pour la cueillette de produits de récolte à tige selon la revendication 4, **caractérisé par le fait que** le châssis-support (28) d'un côté au moins est porté par un système de roulettes (58).

6. Outil frontal pour la cueillette de produits de récolte à tige selon une ou plusieurs des revendications précédentes, **caractérisé par le fait que** le mouvement de pivotement de l'élément de capotage (23, 24, 25), au nombre d'au moins un, autour de l'axe (38) orienté transversalement à la direction de déplacement (FR) est amorti par un élément amortisseur (72).

7. Outil frontal pour la cueillette de produits de récolte à tige selon la revendication 6, **caractérisé par le fait que** l'élément amortisseur (72, 73) est conformé en amortisseur hydraulique et/ou pneumatique et/ou mécanique, connu en soi.

8. Outil frontal pour la cueillette de produits de récolte à tige selon une ou plusieurs des revendications précédentes, **caractérisé par le fait que** le pivotement de ou des élément(s) de châssis latéral (14) du châssis principal (12) est obtenu de manière connue en soi à l'aide d'un organe de commande conformé en vérin (7, 8) et **par le fait qu'**à chaque élément de châssis latéral (13, 14) est associé un vérin (7, 8) distinct.

9. Outil frontal pour la cueillette de produits de récolte à tige selon une ou plusieurs des revendications précédentes, **caractérisé par le fait que** le mouvement de pivotement de chaque châssis intermédiaire (39) des éléments de capotage (24, 25) autour de l'axe (47) orienté dans la direction de déplacement (FR) est obtenu à l'aide d'un organe de commande (59) disposé entre l'élément de châssis central (13) ou l'élément de châssis latéral (14) et le châssis intermédiaire (39).

10. Outil frontal pour la cueillette de produits de récolte à tige selon la revendication 9, **caractérisé par le fait que** l'organe de commande (59) est conformé en vérin (51).

11. Outil frontal pour la cueillette de produits de récolte à tige selon une ou plusieurs des revendications précédentes, **caractérisé par le fait que** l'organe de commande conformé en vérin (7, 8) de l'élément de châssis latéral (14) concerné est connecté en parallèle avec l'organe de commande (59) conformé en vérin (51) du châssis intermédiaire (39).

12. Outil frontal pour la cueillette de produits de récolte à tige selon la revendication 11, **caractérisé par le fait que** les vérins (7, 8, 51) du point de vue du dimensionnement sont accordés entre eux, de telle sorte que lors du pivotement de la position de travail vers la position de transport, le châssis intermédiaire (39) pivote en premier de manière automatique autour de l'axe (47) orienté dans la direction de déplacement (FR), avant que l'élément de châssis latéral (14) soit déplacé de la position de travail dans la position de transport.

13. Outil frontal pour la cueillette de produits de récolte à tige selon une ou plusieurs des revendications précédentes, **caractérisé par le fait que** le vérin (51) qui fait pivoter le châssis intermédiaire (39) de la position de travail vers la position de transport autour de l'axe (47) orienté dans la direction de déplacement (FR) est couplé à une soupape anti-retour (68, 69) pilotée.

14. Outil frontal pour la cueillette de produits de récolte à tige selon une ou plusieurs des revendications précédentes, **caractérisé par le fait que** lors du pivotement de l'élément de châssis intermédiaire (14), au nombre d'au moins un, de la position de transport vers la position de travail et inversement, une impulsion de commutation (I1, I2) est générée par l'élément de châssis latéral (14) en mouvement pour la commutation automatique de la soupape anti-retour (68, 69) pilotée couplée au vérin (51) du châssis intermédiaire.

15. Outil frontal pour la cueillette de produits de récolte à tige selon la revendication 14, **caractérisé par le fait que** les impulsions de commutation (I1, I2) pour la commutation automatique de la soupape anti-retour (68, 69) pilotée sont générées chaque fois à l'instant où l'élément de châssis latéral (14) atteint ou quitte la position de travail.

16. Outil frontal pour la cueillette de produits de récolte à tige selon une ou plusieurs des revendications précédentes, **caractérisé par le fait que** le châssis de support (28) des éléments de capotage (23, 24, 25) peut être verrouillé dans la position de travail.

17. Outil frontal pour la cueillette de produits de récolte à tige selon une ou plusieurs des revendications précédentes, **caractérisé par le fait que** l'inclinaison des capots avant (26) des éléments de capotage (23, 24, 25) est réglable dans la direction verticale.
